# EUROPÄISCHE PATENTSCHRIFT

(11) **EP 2 016 473 B1**
(45) Veröffentlichungstag und Bekanntmachung des Hinweises auf die Patenterteilung: **04.07.2012**
(21) Anmeldenummer: 07724766.6
(22) Anmeldetag: 02.05.2007
(51) Int. Cl.: G05D 1/02, G01C 15/00, A63C 19/06, F16M 11/32

(54) **REFERENZSTRAHLGENERATOR ZUR ERZEUGUNG VON LEITSTRAHLEN FÜR MARKIERWAGEN**
REFERENCE BEAM GENERATOR FOR GENERATING GUIDE BEAMS FOR MARKING MACHINES
GENERATEUR DE FAISCEAU DE REFERENCE POUR LA PRODUCTION DE FAISCEAUX CONDUCTEURS POUR CHARIOTS DE MARQUAGE

(30) Priorität: 11.05.2006 EP 06113815
(43) Veröffentlichungstag der Anmeldung: 21.01.2009
(73) Patentinhaber: Leica Geosystems AG, 9435 Heerbrugg (CH)
(72) Erfinder: WALSER, Bernd, CH-9435 Heerbrugg (CH)
(74) Vertreter: Kaminski Harmann
(86) Internationale Anmeldenummer: PCT/EP2007/003840
(87) Internationale Veröffentlichungsnummer: WO 2007/131626

(56) Entgegenhaltungen:
- EP-A2- 0 488 046
- FR-A- 2 699 272
- US-A- 4 247 809
- US-A- 4 832 296
- US-A- 5 983 510
- US-A- 6 065 217

## Beschreibung

Die Erfindung betrifft einen Referenzstrahlgenerator zur Erzeugung von Leitstrahlen für die Führung eines Markierwagens nach dem Oberbegriff des Anspruchs 1.

Zum Markieren von Sportfeldern ist die Verwendung von optischen Leitstrahlen, die von einem Basissystem erzeugt werden und durch die ein Markierwagen geführt werden kann bekannt, wie sie beispielsweise in der WO 2006/013386 beschrieben wird.

Ein solches System ist auch aus der DE 40 13 950 bekannt. Beschrieben wird eine Vorrichtung zur Markierung von Grundflächen, insbesondere von Böden in Messehallen. Die Vorrichtung steuert ein Fahrzeug mit Eigenantrieb automatisch entlang der Führungslinie eines Laserstrahls, wobei eine Markiereinrichtung gemäß einem vorgebbaren Markierprogramm in Abhängigkeit von der zurückgelegten Strecke Markierungen auf die Grundfläche aufbringt. Die Vorrichtung ist besonders für die Markierung von Messehallen vorgesehen. Durch eine Laserdiode und eine Optik wird ein Strahl erzeugt, der zur Festlegung einer geraden Strecke dient, z.B. einer Seite eines zu markierenden Feldes. Der zur Ausbringung der Markiersubstanz verwendete Markierwagen weist einen Detektor für die Laserstrahlung auf, wobei die Position des Markierwagens relativ zum Strahl ermittelt wird, so dass der Wagen anhand des Leitstrahls automatisch gesteuert werden kann.

Die Laserdiode wird hierbei auf einem Laborwagen angeordnet, welcher wiederum zur Festlegung bezüglich einer definierten Position auf einer Grundplatte mit Führungsleisten befestigt wird. Zur Durchführung der Markierungsarbeiten muss der optische Leitstrahl mit Hilfe einer Justierplatte genau ausgerichtet werden, wobei die zulässige Auftreffhöhe des Laserstrahls beschränkt ist, da der Markierwagen während der Bewegung in einem Bereich des ein Signalempfangs verbleiben soll.

Damit ist dass System nur für vergleichsweise kurze Distanzen und ebenen Untergrund beschränkt, wie er beispielsweise innerhalb von Hallen gegeben ist. Eine Justierung des Strahls über grössere Entfernungen hinweg bleibt problematisch, da ein Laserpunkt in zwei Dimensionen ausgerichtet werden muss. Zudem führen Bodenunebenheiten, wie sie gerade bei Sportfeldern mit natürlichem Untergrund auftreten, schnell dazu, dass der Empfänger des Markierwagens den Strahl verliert.

Die Ausbringung von Spielfeldmarkierungen mit solchen Systemen ist naturgemäss abhängig von der Handhabbarkeit und Genauigkeit des Leitstrahls. Dessen Positionierung und Lage im Raum kann sich dabei an verschiedenen Bezugsgrössen orientieren. Zumeist wird als ein Fixpunkt des zu markierenden Spielfeldes eine Ecke des Sportfeldes gewählt. Je nach Sportart, örtlichen Gegebenheiten und weiteren Umständen, wie z.B. Regelanforderungen, werden dann die Markierungen mit Bezug zu anderen Grössen definiert. Diese können beispielsweise bereits markierte Ecken eines Spielfeldes, Pfosten von Toren oder bereits vorhandene Grundlinien sein. Je nach Bedingungen können hierbei geringfügige Abweichungen von Idealmassen, z.B. durch schiefwinklige Spielfelder, entstehen.

Um eine entsprechend angepasste Markierung zu definieren, wird von einem Referenzstrahlgenerator ein oder auch zwei Laserstrahlen zumeist fächerförmig emittiert, wobei diese Leitstrahlen häufig bezüglich eines an einem Referenzpunkt positionierten Referenzzieles ausgerichtet werden. Ein solcher Referenzstrahlgenerator wird beispielsweise in der EP 1 760 428 beschrieben. Der Referenzstrahlengenerator weist eine Lasersendeeinheit auf, die einen Laser und einen Strahlaufweiter zur Erzeugung eines Laserfächers umfasst, vorzugsweise auch eine weitere optische Komponente - z.B. ein Pentaprisma - zum Aufspalten des Laserfächers in zwei Teilfächer. Aufgrund der geometrischen Bedingungen der meisten Sportfelder ist eine gleichzeitige Erzeugung und Festlegung von zwei oder mehr Strahlen bzw. Teilstrahlen vorteilhaft, da so ohne Umstellen des Referenzstrahlgenerators zwei Leitstrahlen genutzt werden können. Dabei ist der Generator so ausgebildet, dass er an einer definierten Position fixierbar ist, beispielsweise anhand eines Stativs oder einer Trägerplatte. Im Allgemeinen wird der einen Fächerstrahl emittierende Laser auf einer rechtwinkligen Winkelplatte mit zwei Schenkeln montiert, und zwar derart, dass er den Laserstrahl in einem definierten Abstand zu einer zu markierenden Linie, entsprechend den baulichen Gegebenheiten des genutzten Markierwagens, emittiert. Der Detektor des Markierwagens ist vorzugsweise als Linear- oder Flächen-Array von Photodioden ausgebildet, welcher Array vorteilhaft auf der Steuereinheit quer zur durch die Lasersendeeinheit des Referenzstrahlgenerators aufgespannten Laserlicht-Ebene angeordnet ist.

Der Referenzstrahlengenerator muss dabei entweder gegenüber dem Schwerefeld horizontiert oder bezüglich der Erdoberfläche ausgerichtet werden. Da zumeist ein waagrechter, d.h. neigungsloser Spielfeldverlauf gewünscht ist, fällt die Ausrichtung bezüglich der Spielfeldoberfläche meist mit einer Horizontierung zusammen.

Eine einfache Lösung zum Aufstellen des Referenzstrahlgenerators würde sich durch die Verwendung von fest positionierten und verankerten, mechanisch belastbaren Sockeln anbieten. Jedoch stellen diese hinsichtlich anderer Anforderungen Probleme dar. So resultiert bei einem durch Personen bespielbaren Platz eine Verletzungsgefahr und die Möglichkeit des Abmähens von Bewuchs wird gestört. Zudem sind die so angeordneten Sockel in der Realität nur schwer stabil anbringbar, so dass sich durch die mechanische Belastung eine Positionsveränderung ergeben kann.

Eine Alternative bietet die Verwendung von reinen Markierpunkten, z.B. in Form von Erdnägeln. Diese können tief genug versenkt werden, so dass Mähvorgänge nicht gestört werden und Verletzungen weitgehend vermeidbar sind. Zudem dienen diese Erdnägel nur als Markierpunkte und müssen daher keine mechanische Belastung aufnehmen, die zu einer Positionsveränderung führen könnte. Bezüglich solcher Erdnägel kann nun der Referenzstrahlgenerator sowie ggf. auch die Referenzziele zur Ausrichtung der Leitstrahlen positioniert werden.

Aufgabe der Erfindung ist es, einen Referenzstrahlgenerator bereitzustellen, der eine vereinfachte, robustere und schnellere Festlegung von Leitstrahlen für Markierwagen bzw. deren Führung erlaubt.

Eine weitere Aufgabe der Erfindung ist es, einen solchen Referenzstrahlgenerator bereitzustellen, der sich in seiner Neigung bzw. die Neigung der von ihm emittierten Leitstrahlen verändern lässt, ohne dass eine signifikante Positionsveränderung gegenüber einem Referenzpunkt erfolgt.

Diese Aufgaben werden erfindungsgemäss durch die Gegenstände des Anspruchs 1 bzw. der abhängigen Ansprüche gelöst oder die Lösungen weitergebildet.

Die Erfindung beruht nun darauf, dass eine Veränderung der Leitstrahlausrichtung durch eine koordinierte und verknüpfte Verstellung von zwei der wenigstens drei Beine bewirkt wird, wobei eine Verstellung eines der beiden Beine mit einer gegenläufigen Verstellung des jeweils anderen Beins verbunden ist.

Zwar weisen dreibeinige Systeme den Vorteil einer hohen Stabilität und leichten Plazierbarkeit auf, allerdings ist deren Horizontierung problematisch, da de Beine jeweils einen Winkelbereich von 120° abdecken. Eine Anordnung mit vier Beinen und 90° ist leichter auszurichten und zu horizontieren, aber mit Nachteilen hinsichtlich der Laufstellung auf unebenem Boden verbunden, so dass für Referenzstrahlgeneratoren dreibeinige Lösungen Vorteile aufweisen. Eine der vierbeinigen Lösung gleichwertige Verstellbarkeit wird durch die verknüpft gegenläufige bzw. gegenwirkende Verstellung von zwei der drei Beine erreicht. Aus dem Bereich der geodätischen Instrumente ist es zudem bekannt, dass die Position eines über einem Referenzpunkt ausgerichteten Lots in einem Bereich weniger Millimeter stabil bleibt, wenn ein Bein eines Dreibeins in der Länge verändert wird. Durch die Veränderung der Beinlängen kann somit ohne grosse Positionsveränderung eine Horizontierung bewirkt werden. Die Verstellung kann dabei manuell von einem Benutzer oder automatisch bewirkt werden. Die Verknüpfung der Veränderung der Beinlängen kann dabei mechanisch oder auch elektronisch erfolgen, wobei auch ein großenordnungsmäßig gleicher oder identischer Verstellweg für beide verknüpft verstellbaren Beine realisiert werden kann. Durch diese Verknüpfung kommt es für einen Punkt oberhalb der Verbindungsachse der Beine zu einer Bewegung auf einer gekrümmten Bahn. Durch die Längenverstellung des dritten Beins wird eine hierzu orthogonale Bewegung bewirkt, so dass die Kombination von zwei gekoppelt verstellbaren Beinen mit einem dritten unabhängig verstellbaren Bein eine unabhängige Verstellmöglichkeit um zwei Neigungsachsen zur Folge hat. Der Punkt kann somit auf einer gekrümmten Fläche oder Sphäre in zwei orthogonalen Richtungen bewegt werden. Werden diesen Neigungsfreiheitsgraden die beiden Laserfächer bzw. Leitstrahlen zugeordnet, so können diese unabhängig voneinander in ihrer Neigung verändert und somit ausgerichtet werden, wobei die Positionierung gegenüber dem Referenzpunkt im wesentlichen unverändert bleibt.

Ein mögliches Verfahren zum Aufstellen und Ausrichten eines Ausführungsbeispiels des erfindungsgemässen Referenzstrahlgenerators stellt sich somit wie folgt dar
1. Ausklappen der Beine des Dreibeins eines Referenzstrahlgenerators,
2. Einschalten eines Laserlots als optischem Zeiger, wobei das Laserlot dem Dreibein zugeordnet und senkrecht zur Verbindungsebene der Beine orientiert ist,
3. Aufstellen des Dreibeins bzw. Referenzstrahlgenerators über dem Referenzpunkt so, dass der Laserpunkt den Referenzpunkt trifft und ohne Berücksichtigung einer Horizontierung,
4. Veränderung der Länge der beiden verknüpften Beine oder des dritten Beins, um die Neigung der Leitstrahlen einzustellen bzw. um den Referenzstrahlengenerator zu horizontieren, wobei sich der Laserpunkt gegenüber dem Referenzpunkt nur wenig bewegt.

In anderen erfindungsgemässen Ausführungsformen kann anstelle eines Laserlotes auch ein mechanischer Taster oder Zeiger, z.B. ein Teleskoparm oder -zeiger Verwendung finden.

Durch die erfindungsgemässe koordinierte Veränderung der Beinlängen bewegt sich der der Laserspot oder der mechanische Zeiger auf einer Kugelfläche bzw. gekrümmten Oberfläche um den Referenzpunkt, so dass etwaige Abweichungen größtenteils innerhalb eines tolerierbaren Bereichs verbleiben.

Ein erfindungsgemäßer Referenzstrahlgenerator wird nachfolgend anhand von in der Zeichnung schematisch dargestellten Ausführungsbeispielen rein beispielhaft näher beschrieben. Im einzelnen zeigen
- Fig.1: die schematische Erläuterung von Verfahren zur Markierung von Sportfeldern;
- Fig.2: die figürliche Darstellung eines Referenzstrahlgenerators des Stands der Technik;
- Fig.3: die schematische Erläuterung der Positionierung und Ausrichtung eines Referenzstrahlgenerators;
- Fig.4: die schematische Darstellung einer ersten Ausführungsform eines Zeigers für einen erfindungsgemässen Referenzstrahlgenerator;
- Fig.5: die schematische Darstellung einer zweiten Ausführungsform eines Zeigers für einen erfindungsgemässen Referenzstrahlgenerator;
- Fig.6: die schematische Darstellung der geometrischen Verhältnisse für einen erfindungsgemässen Referenzstrahlgenerator;
- Fig.7: die schematische Darstellung einer ersten Ausführungsform einer Verstellkomponente für einen erfindungsgemässen Referenzstrahlgenerator und
- Fig.8: die schematische Darstellung einer zweiten Ausführungsform einer Verstellkomponente für einen erfindungsgemässen Referenzstrahlgenerator.

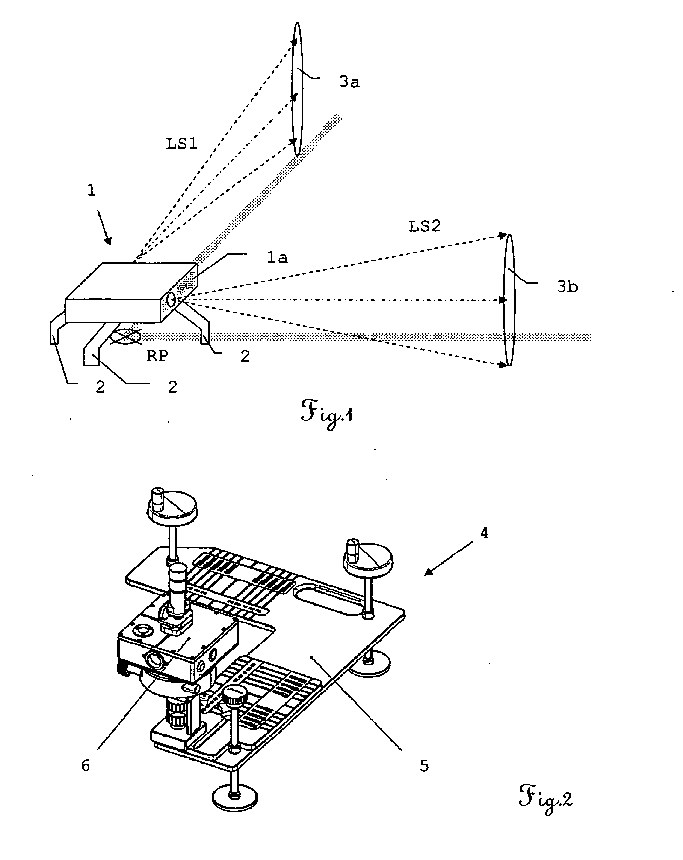

Fig.1 erläutert Verfahren zur Markierung von Sportfeldern mittels durch Referenzstrahlgeneratoren erzeugten Laserfächern schematisch. Dargestellt wird eine Situation, bei der ein Spielfeld mit gattungsgemäßen Markierungen versehen werden soll. Dabei erfolgt die Vorgabe der zu markierenden Linie über einen von einem Bearbeiter zu bedienenden, auf einem Eckpunkt als Referenzpunkt RP positionierten Referenzstrahlgenerator 1. Ein hier nicht dargestellter Markierwagen wird vermittels der von dem Referenzstrahlgenerator 1 als Leitstrahl LS1 und LS2 emittierten optische Verbindung geführt. Da meist mehrere mit einem Winkel α zueinander gelegene Linien markiert werden sollen, werden zumeist zwei Leitstrahlen LS1 und LS2 unter einem vordefinierten Winkel, z.B. von 90°, in zwei unterschiedliche Richtung emittiert, wobei beide Leitstrahlen LS1 und LS2 bezüglich der Oberfläche oder der Horizontalen sowie der zu erzeugenden Spielfeldgeometrie ausgerichtet werden müssen. Durch eine oder ggf. mehrere Neupositionierungen des Referenzstrahlgenerators 1 kann schliesslich das gesamte Spielfeld markiert werden.

Der Referenzstrahlgenerator 1 weist ein Gehäuse 1a als Trägerelement auf, das aber auch als L-förmige Basisplatte mit zwei rechtwinklig zueinander orientierten Schenkeln als Trägerelement ausgebildet sein kann. Gegenüber diesem gegenüber der Erdoberfläche festlegbaren Trägerelement sind die optischen Komponenten des Referenzstrahlgenerators 1 verstellbar montiert, wobei das Gehäuse 1a oder ein anderes Trägerelement selbst durch Beine 2 gegenüber der Erdoberfläche positioniert wird. Diese können hierzu bezüglich der Erdoberfläche verstellt werden, wobei aufgrund der zumeist grösseren zu markierenden Strukturen eine genaue Ausrichtung erforderlich ist. Im Gehäuse 1a ist eine Quelle elektromagnetischer Strahlung, z.B. eine Laserdiode, mit Strahlführungsmitteln zur Emission der Strahlung in zwei Leitstrahlen LS1 und LS2 verstellbar angeordnet. Die emittierte Strahlung weist dabei einen asymmetrischen, hier exemplarisch elliptisch dargestellten Strahlquerschnitt 3a und 3b bei einem vorgegebenen Öffnungswinkel auf. Der Strahlquerschnitt 3a und 3b kann dabei bereits durch einen entsprechenden Querschnitt der Quelle bereitgestellt werden oder aber nach der Erzeugung geformt werden. Durch eine solche Emission der beiden Leitstrahlen LS1 und LS2 kann ein oder mehrere Markierwagen zur Erzeugung von zwei Linien des Spielfeldes geführt werden, wobei die generierten Fächer der Leitstrahlen LS1 und LS2 die Ebenen zur Orientierung und Ausrichtung der Markierwagen bereitstellen. Bei hinreichend günstigen Bodenbedingungen, wie z.B. auf sehr ebenen Flächen ohne Störungen, kann der Öffnungswinkel der Leitstrahlen zur Erzielung hoher Intensitäten jedoch auch klein gehalten oder sogar ein kreis- bzw. punktförmiger Querschnitt verwendet werden.

In Fig.2 wird ein Referenzstrahlgenerators 4 des Stands der Technik dargestellt, wie er beispielsweise in der EP 1 760 428 beschrieben wird. Der Referenzstrahlgenerator 4 weist eine L-förmige Basisplatte 5 als Trägerelement und einer schwenk- und verschiebbaren Strahleinheit 6 mit Quelle und Strahlführungsmitteln auf. Eine Ausrichtbarkeit der Basisplatte 5 wird durch drei Beine gewährleistet, von denen zwei mit einer Spindel in der Länge verstellbar bzw. gegenüber der Basisplatte bewegbar sind. Durch die Verstellung der Beine muss nun zuerst der eine Leitstrahl und nachfolgend der zweite Leitstrahl präzise ausgerichtet werden, wobei sich beide Ausrichtvorgänge gegenseitig beeinflussen und zu einer Verschiebung der Basisplatte 5 gegenüber einem Referenzpunkt führen. Während bei kurzen Distanzen solche geringe Abweichungen nicht von Bedeutung sein müssen, können diese bei der Führung von Markierwagen über grössere Distanzen zu merklichen Abweichungen führen, so dass eine entkoppelte Verstellbarkeit ohne signifikante Verschiebung der Positionierung gegenüber einem Referenzpunkt erforderlich wird.

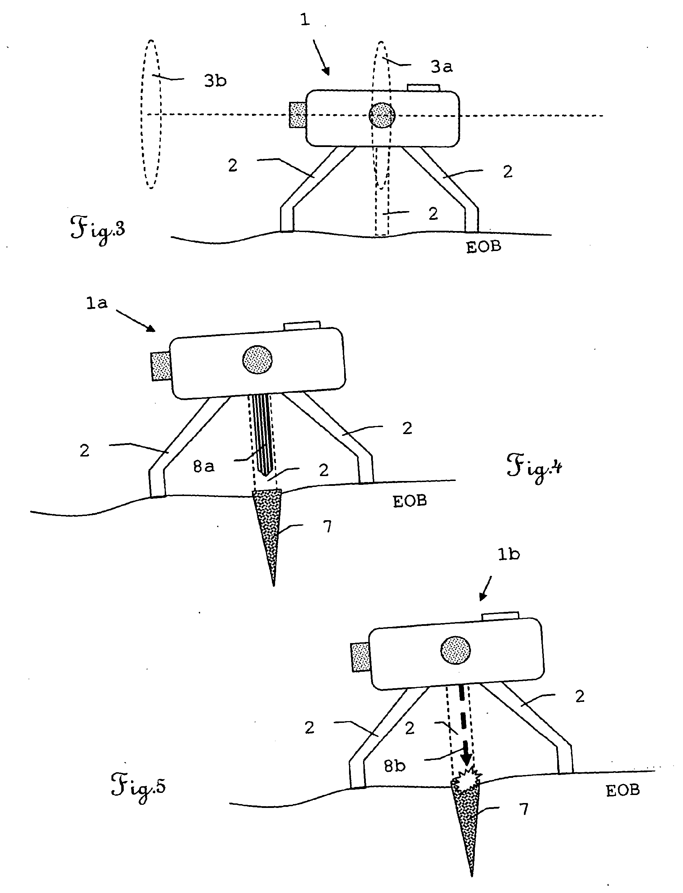

Fig.3 erläutert die Positionierung und Ausrichtung eines Referenzstrahlgenerators 1 schematisch. Der Referenzstrahlgenerator 1 weist drei verstellbare Beine 2 auf, die als Positionierelemente bezüglich der Erdoberfläche EOB dienen. Durch die Positionierung und Ausrichtung werden die Lichtfächer mit ihren Strahlquerschnitten 3a und 3b so im Raum angeordnet, dass sie bezüglich eines Referenzpunktes als Ausgangspunkt festgelegt sind und Leitstrahlen zur Führung eines Markierwagens darstellen. Der Verlauf der Leitstrahlen wird dabei zumeist an der Oberfläche einer zu markierten Struktur ausgerichtet, d.h. bei einem insgesamt geneigtem Spielfeld werden die Leitstrahlen unter Umständen nicht horizontiert sondern verlaufen entsprechend der Oberfläche ebenfalls geneigt. Um den Endpunkt zur präzisen Ausrichtung zu definieren, kann ein entsprechendes Referenzelement verwendet werden, wie es beispielsweise in der EP 1 760 428 beschrieben wird. Je nach Auslegung des Referenzstrahlgenerators 1 und des Oberflächenverlaufs sowie der Entfernung zum Endpunkt der Markierung kann eine Feinverstellung der Emissionsrichtung gegenüber dem Trägerelement der Strahlquelle oder von Strahlführungsmitteln für wenigstens einen der Leitstrahlen vorteilhaft sein. Zur Anpassung der Leitstrahlen an Querneigungen ist eine einstellbare Orientierung des Strahlquerschnitts für wenigstens einen der Leitstrahlen verwendbar, so dass dieser z.B. vertikal gegenüber der Erdoberfläche ausgerichtet werden kann.

Die genaue Ausrichtung von Leitstrahl und Strahlquerschnitt 3a oder 3b ist somit abhängig von der Bodenform, so dass entsprechende Verstellmöglichkeiten - gegebenenfalls in mehreren Stufen - vorteilhaft sind. Anzustreben ist jedoch immer die schnelle Grobausrichtung des gesamten Referenzstrahlgenerators 1. Bei Vorliegen günstiger Umstände, wie z.B. bei kurzen Distanzen oder glatten bzw. wenig strukturierten Bodenverhältnissen, kann bereits durch eine einzige Justierung des Gesamtsystems eine hinreichend genaue Festlegung der Leitstrahlen erfolgen.

Fig.4 zeigt die schematische Darstellung einer ersten Ausführungsform eines Zeigers für einen erfindungsgemässen Referenzstrahlgenerator 1a. Für viele Anwendungsfelder erfolgt die Positionierung des Referenzstrahlgenerators 1' bezüglich eines ausgezeichneten Referenzpunkts, der beispielsweise durch einen Erdnagel 7 als Markierung vorgebbar ist. Solche Erdnägel weisen den Vorteil einer gegenüber dem Erdboden EOB oder dessen Bewuchs versenkten Anbringung auf, so dass beispielsweise ein Übermähen durch Rasenmäher möglich ist. Die versenkte Anordnung und die mangelnde Belastbarkeit aufgrund der möglicherweise resultierenden Veränderungen der Position verhindern eine direkte Positionierung mit belastbarem physischem Kontakt zum Erdnagel 7. Erfindungsgemäss wird daher ein mechanischen Zeiger 8a, insbesondere mit orthogonaler Anbringung gegenüber der durch die Emissionsrichtungen der Leitstrahlen definierten Ebene, zur Positionierung über einem Referenzpunkt verwendet. Die genaue Ausrichtung der Zeigerspitze gegenüber dem Erdnagel 7 kann leicht von der Seite beobachtet werden, so dass eine schnelle und genaue Positionierung möglich ist.

Einer zweiten Ausführungsform eines Zeigers 8b für einen erfindungsgemässen Referenzstrahlgenerator 1b wird in Fig.5 schematisch dargestellt. Der optischen Zeiger 8b wird in diesem Beispiel durch einen senkrecht zur durch die Emissionsrichtungen der Leitstrahlen definierten Ebene emittierten Laserstrahl bereitgestellt. Ein Benutzer beobachtet dabei den Aufpunkt des Laserstrahls auf dem Erdboden EOB und verstellt den Referenzstrahlgenerator 1b so lange, bis der Laserstrahl den Erdnagel 7 möglichst mittig trifft.

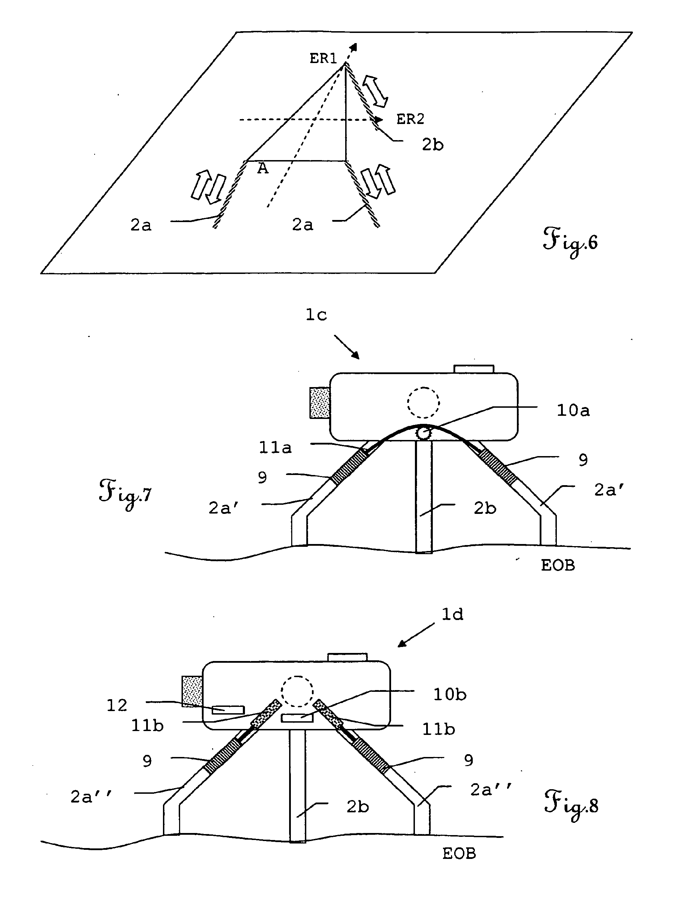

Die erfindungsgemässe Verstellbarkeit wird in Fig.6 anhand der geometrischen Verhältnisse für einen erfindungsgemässen Referenzstrahlgenerator erläutert. Durch die drei Beine 2a und 2b wird eine Ebene aufgespannt, die hier exemplarisch als abstraktes Dreieck dargestellt wird. Diese Ebene wird nach ihrer Positionierung bezüglich eines Referenzpunktes so verstellt, dass die Emissionsrichtungen ER1 und ER2 von zwei Leitstrahlen gegenüber dem Erdboden bzw. dessen Verlauf ausgerichtet werden. Eine Verstellung des Beins 2b bewirkt eine Veränderung der Neigung der Emissionsrichtung ER1 gegenüber dem Erdboden. Eine gegenläufige, insbesondere gleichgrosse, Veränderung der verknüpft verstellbaren Beine 2a führt zu einer Zu- oder Abnahme der Neigung der Emissionsrichtung ER2. Eine mechanisch oder elektronisch verknüpfte Verstellbarkeit führt dazu, dass eine koordinierte Verstellung beider Beine 2a erfolgt, d.h. die Verstellung eines Beines 2a ist mit der zwangsläufigen und gegengerichteten Verstellung des zugeordneten anderen Beins 2a verbunden. Die gegenläufig verknüpfte Verstellung von zwei der drei Beine führt somit zur entkoppelten Ausrichtbarkeit bzw. Ausrichtung der Laserebenen in zwei Achsen. Vorteilhafterweise kann die Emissionsrichtung ER1 des ersten Leitstrahls senkrecht zu der die verknüpft verstellbaren Beine 2a verbindenden Achse A orientiert und die Emissionsrichtung ER2 des zweiten Leitstrahls parallel zu der die verknüpft verstellbaren Beine verbindenden Achse A orientiert sein.

Für ein realisiertes Ausführungsbeispiel eines Referenzstrahlgenerators besteht das typische Erfordernis, eine Verstellung um 8 arcmin vorzunehmen. Die Verstellung eines Beins um 1 mm bewirkt eine Veränderung von 16 arcmin, so dass bereits Verstellbereiche von 0,5 mm für die meisten Anwendungszwecke bzw. Oberflächen ausreichen.

Die hier rein beispielhaft als Dreieck ausgebildete Ebene kann auch durch ein L-förmiges Trägerelement repräsentiert werden, wobei ein solches Trägerelement eine Geometrie mit zwei rechtwinklig angeordneten Schenkeln aufweist, an deren Endpunkten jeweils eines der drei Beine angeordnet ist. Die Emissionsrichtungen der Leitstrahlen werden dann korrespondierend zu den beiden Schenkeln festgelegt. Durch eine solche Ausgestaltung können die beiden Leitstrahlen in ihrer Emissionsrichtung bzw. Neigung unabhängig voneinander ausgerichtet werden. Die Verstellung einer Emissionsrichtung beeinflußt nicht die Neigung der anderen Emissionsrichtung. Eine ggf. erfolgende Drehung des Strahlquerschnitts gegenüber dem Erdboden kann durch Verstell- bzw. Ausrichtelemente kompensiert werden.

Fig.7 zeigt die schematische Darstellung einer ersten Ausführungsform einer Verstellkomponente zur gegenläufig verknüpften Verstellung von zwei Beinen 2a' der wenigstens drei verstellbaren Beine eines erfindungsgemässen Referenzstrahlgenerators 1c. Aus Gründen einer besseren Veranschaulichung werden in Fig.7 und Fig. 8 die erfindungsgemäss integrierbaren Zeiger der Fig. 4 oder Fig.5 nicht dargestellt. Durch die Verstellkomponente wird die Länge der Beine 2a' innerhalb von Verstellbereichen 9 verändert, die beispielsweise durch eine teleskopartige Ausbildung der Beine gewährleistet werden. In diesem Ausführungsbeispiel weist die Verstellkomponente ein mechanisches Kopplungselement zur gegenläufig verknüpften Verstellung auf, welches hier als eine über ein Zahnrad 10a verschiebbare flexible Zahnstange 11a ausgebildet ist. Hierdurch wird eine gegenläufige und gleichgroße Verstellung der beiden Beine 2a' bewirkt, wobei eine solche Verstellung das dritte Bein 2b unbeeinflußt läßt. Zur Handhabung kann das Zahnrad 10a über eine Welle oder ein weiteres Zahnrad mit einem manuell bedienbaren Antriebsknopf verbunden sein. Der durch die Zahnstange 11a erfindungsgemäss bewirkbare Verstellumfang kann beispielsweise +/- 50 mm betragen, wobei zur Erzielung einer sensitiven Verstellbarkeit auch eine Getriebe, z.B. zur Untersetzung, verwendet werden kann. Zudem kann jedes der drei Beine 2a' und 2b noch über weitere Elemente, wie z.B. teleskopartige Verlängerungen zum Ausgleich grober Bodenunebenheiten verfügen, wobei für diese keine verknüpfte Verstellbarkeit gegeben ist.

In Fig.8 wird eine zweite Ausführungsform einer Verstellkomponente für einen erfindungsgemässen Referenzstrahlgenerator 1d schematisch dargestellt. In diesem Beispiel weist die Verstellkomponente eine elektronische Steuerung 10b und wenigstens ein elektrisches Antriebselement 11b auf, wobei das Antriebselement eine Verkürzung oder Verlängerung des angetriebenen Vertellbereichs 9 eines Beines 2a" bewirkt. Um eine zusätzliche, schwerkraftgesteuerte Horizontierung zu ermöglichen, kann ein Neigungsmesser 12 verwendet werden, der mit der elektronische Steuerung 10b gekoppelt wird und eine automatische Ausrichtung des Referenzstrahlgenerators 1d bzw. der Leitstrahlen ermöglicht.

## Patentansprüche

1. Referenzstrahlgenerator (1a-d), zur Führung eines gegenüber dem Referenzstrahlgenerator (1a-d) bewegbaren Markierwagens für die Erzeugung bodengebundener Markierungen, mit wenigstens
- einem Trägerelement mit wenigstens drei verstellbaren, insbesondere längenverstellbaren, Beinen (2,2a,2b,2a',2a") als Positionierelemente bezüglich der Erdoberfläche (EOB),
- einer Quelle elektromagnetischer Strahlung, insbesondere einer Laserdiode, zur Erzeugung eines ersten und eines zweiten mit einem vorgegebenen Öffnungswinkel fächerförmig emittierten Leitstrahls (LS1,LS2),
**gekennzeichnet durch**
eine Verstellkomponente zur gegenläufig verknüpften Verstellung von zwei Beinen (2a,2a',2a") der wenigstens drei verstellbaren Beine (2,2a,2b,2a',2a").

2. Referenzstrahlgenerator (1a-d) nach Anspruch 1,
**dadurch gekennzeichnet, dass**
die Verstellkomponente ein mechanisches Kopplungselement zur gegenläufig verknüpften Verstellung, insbesondere eine verschiebbare Zahnstange (11a), aufweist.

3. Referenzstrahlgenerator (1a-d) nach Anspruch 1 oder 2,
**dadurch gekennzeichnet, dass**
die Verstellkomponente eine elektronische Steuerung (10b) und wenigstens ein elektrisches Antriebselement (11b) aufweist.

4. Referenzstrahlgenerator (1a-d) nach einem der vorangehenden Ansprüche,
**dadurch gekennzeichnet, dass**
die Emissionsrichtung (ER1) des ersten Leitstrahls (LS1) senkrecht zu der die verknüpft verstellbaren Beine verbindenden Achse (A) orientiert ist.

5. Referenzstrahlgenerator (1a-d) nach einem der vorangehenden Ansprüche,
**dadurch gekennzeichnet, dass**
die Emissionsrichtung (ER2) des zweiten Leitstrahls (LS2) parallel zu der die verknüpft verstellbaren Beine verbindenden Achse (A) orientiert ist.

6. Referenzstrahlgenerator (1a-d) nach einem der vorangehenden Ansprüche,
**gekennzeichnet durch**
einen optischen oder mechanischen Zeiger (8a,8b), insbesondere orthogonal zur **durch** die Emissionsrichtungen (ER1,ER2) der Leitstrahlen definierten Ebene, zur Positionierung über einem Referenzpunkt (7).

7. Referenzstrahlgenerator (1a-d) nach einem der vorangehenden Ansprüche,
**gekennzeichnet durch**
einen Neigungsmesser (12).

8. Referenzstrahlgenerator (1a-d) nach einem der vorangehenden Ansprüche,
**gekennzeichnet durch**
eine Feinverstellung der Emissionsrichtung (ER1,ER2) gegenüber dem Trägerelement für wenigstens einen der Leitstrahlen (LS1,LS2).

9. Referenzstrahlgenerator (1a-d) nach einem der vorangehenden Ansprüche,
**dadurch gekennzeichnet, dass**
die Orientierung des Strahlquerschnitts (3a,3b) für wenigstens einen der Leitstrahlen (LS1,LS2) vertikal gegenüber der Erdoberfläche (EOB) einstellbar ist.

10. Referenzstrahlgenerator (1a-d) nach einem der vorangehenden Ansprüche,
**dadurch gekennzeichnet, dass**
das Trägerelement eine Geometrie mit zwei rechtwinklig angeordneten Schenkeln, insbesondere eine L-förmige Geometrie, aufweist, wobei an den Endpunkten der beiden Schenkel jeweils eines der wenigstens drei Beine (2,2a,2b,2a',2a") angeordnet ist.

## Claims

1. Reference beam generator (1a-d) for guiding a marking machine, movable with respect to the reference beam generator (1a-d), for making ground markings, having at least
- a carrier element with at least three adjustable, in particular length-adjustable, legs (2, 2a, 2b, 2a', 2a") as positioning elements with reference to the ground surface (EOB),
- a source of electromagnetic radiation, in particular a laser diode, for generating a first and a second guide beam (LS1, LS2) emitted in the shape of a fan and with a prescribed aperture angle,
**characterized by** an adjusting component for oppositely linked adjustment of two legs (2a, 2a', 2a'') of the at least three adjustable legs (2, 2a, 2b, 2a', 2a").

2. Reference beam generator (1a-d) according to Claim 1, **characterized in that** the adjustment component has a mechanical coupling element for oppositely linked adjustment, in particular a displaceable gear rack (11a).

3. Reference beam generator (1a-d) according to Claim 1 or 2, **characterized in that** the adjustment component has an electronic control (10b) and at least one electric drive element (11b).

4. Reference beam generator (1a-d) according to one of the preceding claims, **characterized in that** the emission direction (ER1) of the first guide beam (LS1) is orientated perpendicular to the axis (A) connecting the legs adjustable in a linked fashion.

5. Reference beam generator (1a-d) according to one of the preceding claims, **characterized in that** the emission direction (ER2) of the second guide beam (LS2) is orientated parallel to the axis (A) connecting the legs adjustable in a linked fashion.

6. Reference beam generator (1a-d) according to one of the preceding claims, **characterized by** an optical or mechanical pointer (8a, 8b), in particular at right angles to the plane defined by the emission directions (ER1, ER2) of the guide beams, for positioning over a reference point (7).

7. Reference beam generator (1a-d) according to one of the preceding claims, **characterized by** an inclinometer (12).

8. Reference beam generator (1a-d) according to one of the preceding claims, **characterized by** a fine adjustment of the emission direction (ER1, ER2) with respect to the carrier element for at least one of the guide beams (LS1, LS2).

9. Reference beam generator (1a-d) according to one of the preceding claims, **characterized in that** the orientation of the beam cross section (3a, 3b) for at least one of the guide beams (LS1, LS2) can be set vertically with respect to the ground surface (EOB).

10. Reference beam generator (1a-d) according to one of the preceding claims, **characterized in that** the carrier element has a geometry with two rectangularly arranged limbs, in particular an L-shaped geometry, one of the at least three legs (2, 2a, 2b, 2a', 2a") respectively being arranged at the end points of the two limbs.

## Revendications

1. Générateur de faisceau de référence (1a à d), pour le guidage d'un chariot de marquage, déplaçable par rapport au générateur de faisceau de référence (1a à d), pour la production de marquages liés au sol, avec au moins
- un élément support, avec au moins trois pieds (2, 2a, 2b, 2a', 2a") réglables, en particulier réglables en longueur, faisant office d'éléments de positionnement par rapport à la surface de sol (EOB),
- une source de rayonnement électromagnétique, en particulier une diode laser, pour produire un premier et un deuxième faisceau de guidage (LS1, LS2), émis en forme d'éventail avec un angle d'ouverture prédéterminé,
**caractérisé par**
un composant de réglage, pour le réglage combiné en sens inverse de deux pieds (2a, 2a', 2a") des au moins trois pieds (2, 2a, 2b, 2a', 2a") réglables.

2. Générateur de faisceau de référence (1a à d) selon la revendication 1,
**caractérisé en ce que**
le composant de réglage présente un élément de couplage mécanique, pour le réglage combiné en sens inverse, en particulier une crémaillère (11a) déplaçable.

3. Générateur de faisceau de référence (1a à d) selon la revendication 1 ou 2,
**caractérisé en ce que**
le composant de réglage présente une commande (10b) électronique et au moins un élément d'entraînement (11b) électrique.

4. Générateur de faisceau de référence (1a à d) selon l'une des revendications précédentes,
**caractérisé en ce que**
la direction d'émission (ER1) du premier faisceau de guidage (LS1) est orientée perpendiculairement à l'axe (A) reliant les pieds réglables de manière combinée.

5. Générateur de faisceau de référence (1a à d) selon l'une des revendications précédentes,
**caractérisé en ce que**
la direction d'émission (ER2) du deuxième faisceau de guidage (LS2) est orientée parallèlement à l'axe (A) reliant les pieds réglables de manière combinée.

6. Générateur de faisceau de référence (1a à d) selon l'une des revendications précédentes,
**caractérisé par**
un indicateur (8a, 8b) optique ou mécanique, en particulier perpendiculaire au plan défini par les directions d'émission (ER1, ER2) des faisceaux de guidage, pour le positionnement sur un point de référence (7).

7. Générateur de faisceau de référence (1a à d) selon l'une des revendications précédentes,
**caractérisé par**
un inclinomètre (12).

8. Générateur de faisceau de référence (1a à d) selon l'une des revendications précédentes,
**caractérisé par**
un réglage fin de la direction d'émission (ER1, ER2) par rapport à l'élément support pour au moins l'un des faisceaux de guidage (LS1, LS2).

9. Générateur de faisceau de référence (1a à d) selon l'une des revendications précédentes,
**caractérisé en ce que**
l'orientation de la section transversale de faisceau (3a, 3b) pour au moins l'un des faisceaux de guidage (LS1, LS2) est réglable verticalement par rapport à la surface de sol (EOB).

10. Générateur de faisceau de référence (1a à d) selon l'une des revendications précédentes,
**caractérisé en ce que**
l'élément support présente une géométrie avec deux branches disposées à angle droit, en particulier une géométrie en forme de L, l'un des au moins trois pieds (2, 2a, 2b, 2a', 2a") étant chaque fois disposé aux points d'extrémité des deux branches.
